# EUROPEAN PATENT SPECIFICATION

(11) **EP 2 126 781 B1**
(45) Date of publication and mention of the grant of the patent: **19.05.2010**
(21) Application number: 06831804.7
(22) Date of filing: 27.12.2006
(51) Int. Cl.: G06K 7/10

(54) **A SYSTEM FOR IMAGE ACQUISITION**
SYSTEM ZUR BILDERFASSUNG
SYSTÈME POUR L'ACQUISITION D'IMAGES

(43) Date of publication of application: 02.12.2009
(73) Proprietor: Datalogic Automation S.r.l., Lippo di Calderara di Reno (BO) (IT)
(72) Inventor: SAPORETTI, Claudio, 40139 Bologna (IT)
(74) Representative: Crugnola, Pietro
(86) International application number: PCT/IB2006/003777
(87) International publication number: WO 2008/078129

(56) References cited:
- EP-A- 1 100 038
- WO-A1-2004/003830
- US-A1- 2006 113 386
- US-A1- 2006 232 825

## Description

The invention relates to a system for image acquisition by means of optical camera type devices for image acquisition, particularly fixed optical devices.

In the present disclosure and in the subsequent claims the expression "optical device for image acquisition" is intended for a device capable of acquiring images of an object and particularly optical information associated with an object placed on a supporting plane, e.g. object identifying data, such as an optical code associated with the object.

The expression "optical, information" is intended for any graphical representation constituting a coded or un-coded information. A particular example of optical information consists of linear or bi-dimensional optical codes, wherein the information is coded by means of suitable combinations of elements of predetermined shape, for example squares, rectangles or hexagons, of dark colour (normally black) separated by clear elements (spaces, normally white), such as the bar codes, the stacked codes and the bi-dimensional codes in general, the colour codes, etc. The expression "optical information" further comprises, more generally, also other graphical shapes, including printed or hand-written characters (letters, numbers, etc.) and particular shapes (so-called "patterns"), such as stamps, logos, signatures, fingerprints, etc. The expression "optical information" also comprises graphical representations detectable not only in the range of the visible light, but also in the entire range of wave lengths comprised between infrared and ultraviolet.

It is known from the prior art to use, in systems for image acquisition, cameras comprising mono-dimensional (linear) array of photo-sensors, particularly of CCD or C-MOS type, for acquiring the images of parcels, or objects in general, travelling on a conveyor belt, or other handling and transporting systems, and reading via said cameras the optical information printed or affixed thereon, or extracting from said images various information about the objects, such as the volume or sizes.

The expression "fixed optical device for image acquisition" is intended for an optical device for image acquisition that is used without human manipulation (so-called "unattended scanner"). The object detection typically comprises reading an optical code and also, possibly, measuring a distance and/or a volume or other dimensional properties of the moved objects.

The systems for image acquisition known from the prior art typically comprise at least a telecamera (or simply camera) and a lamp or solid state based lighting system. In most cases, then, one or more reflecting mirrors are present.

These components may be accommodated in a common container or in separated containers.

The camera has the function of collecting the image from which the information for identifying an object has to be extracted. Such image may be the image of the object as a whole or an optical code - as defined above - container therein. The image acquisition occurs by means of a suitable optical system and a dedicated opto-electronics and electronics, wherein an optical sensor exists consisting of a CCD or a C-MOS of linear type comprising an array of photosensitive elements (also called pixels).

The image is acquired by storing subsequent scans, each of which represents a thin "line" of the whole image. The movement of the supporting plane, or the object, at the fixed reading station, enables subsequent lines of the image to be acquired and, then, the complete image to be acquired.

The lighting system enables the acquisition region to be lighted with the appropriate light levels and lighting angles.

The deflecting mirror, or the deflecting mirrors, enables the installation of the device for image acquisition to be optimised from the point of view of the space occupied with respect to the device transporting the objects and enables the field of view of the camera (defined in the following), and possibly also the beam of light emitted by the lighting system, to be oriented towards the desired region.

As already said, the camera acquires the image of the object row by row and transmits said image to a decoder that reconstructs the image acquired by the camera by assembling all the rows, and then processes said image in order to extract (decode) the information of the optical codes and/or other information or send said image or make said image available for a further processing apparatus. The decoding algorithm performs a bi-dimensional analysis of the acquired images whereby a code having any orientation can be properly read. For this reason, the camera systems having linear sensors are considered omnidirectional acquiring and reading systems.

The image acquisition is controlled by a microprocessor, that, typically, is accommodated into the camera, but can be also external and connected with said camera. The microprocessor receives information from external sensors, such as object height sensors, object presence sensors, speed sensors, and uses this information to regulate as good as possible the operating parameters of the camera, such as sensitivity, position of the autofocus system, scanning speed, etc.

The high resolution of the used cameras and the high speed at which the objects normally move, typically between 0.8 and 3 m/s for applications concerning recognising, tracking and sorting objects, require optical configurations with very short exposure times, therefore very open diaphragms and, consequently, a low depth of field. In order to be able to acquire images and read optical information in a wide range of camera-object distances, as typical for industrial applications (for example for identifying and sorting parcels), the camera is usually provided with an autofocus system wherein the receiving optical system (or a part thereof), or the sensor, moves to modify the focalisation parameters of the camera and enabling reading of optical information on objects of different shapes and dimensions. Usually, the autofocus system of the camera "follows" the shape of the objects on the base of the information about the height provided by the height or distance sensors, such as barriers of photocells.

The expression "depth of field" is used herein to indicate the range of camera-object distances, in a neighbourhood of the distance of perfect focalisation set each time by the autofocus system, wherein the object is sufficiently focused in order to enable the optical information to be read.

As mentioned above, the camera needs some essential information for properly setting its operational parameters, such that the optical information associated with the moving objects is acquired.

Particularly, the camera has to know the object speed. Usually, when, for example, the transporting device is a conveyor belt or a tray conveyor, the speed sensor is an optical encoder associated with the conveyor belt that generates a square wave whose frequency is proportional to the speed of the belt. Actually, the encoder is a sensor of the advancing belt, from which the speed of the tape and consequently the speed of the objects is obtained by derivation.

Furthermore, for a correct and effective operation of the autofocus system, the camera has to know the height of the objects or, when said camera is a camera designed for reading codes on a side face of the objects, said camera has to know the lateral position of the objects. Height and distance sensors are then provided, such as photocell barriers and laser sensors that measure the time of flight of the emitted laser beam, said sensors being placed upstream the camera(s). The camera must especially know when acquisition of the sequence of rows, or lines, constituting the image (so-called "frame") has to be started, and how long the acquisition has to last. In systems with a plurality of cameras it is furthermore necessary that every object has an unambiguous identification for all the cameras. For this reason, all the cameras of the system share the same source of "frame trigger" for starting the acquisition of the sequence of rows. This source is typically a presence sensor (for example a photocell) that detects the presence of an object on a horizontal line perpendicular to the direction of the conveyor belt and generates the signal of "frame trigger". Alternatively, the height sensor may be provided as the device of "frame trigger". The signal of "frame trigger" is generated when the measured height exceeds a certain predefined threshold.

The start and the end of the "frame" acquisition are determined from a start/stop signal generated by the "frame trigger" device. However, acquisition does not start as soon as the "frame trigger" device detects an object, but starts with a delay predetermined for every camera of the system, said delay depending on the distance between the "frame trigger" device and the view line of the camera on the plane of the belt, the view angle of the camera, the speed of the objects and the measured height thereof.

All the sensors disclosed above can be physically connected to the camera(s) or to a control device that processes the information and "distributes" said information to the camera(s).

The control device controls all the sensors and can also control the lighting devices.

The information provided by the sensors is distributed to the cameras and every camera, on the base of said information and the positioning of the camera itself, adapts its own acquisition parameters. Particularly each camera, on the base of the information on the speed of the objects or the advancing signal of the conveyor belt received from the control circuit, regulates its own acquisition frequency (or the scanning frequency, i.e. the number of lines acquired per second), so that the spatial distance between two subsequent lines remains constant. For this purpose, in the known systems, all the cameras independently generate a distinct starting signal of the acquisition of each single line of image (so-called "line trigger").

When the acquisition has stated, the camera adapts its own acquisition parameters to the actual condition. Particularly: the acquisition period, and therefore the acquisition frequency, depends on the speed of the objects and can also depend on the height thereof; the position of focus, where autofocus system is present, has to be adapted as much as possible to the shape of the objects; and the sensitivity of the camera depends on the distance or height of the objects (high objects are usually more lighted) and the speed of said objects.

These parameters are typically modified continuously during acquisition.

Every camera is typically connected with a respective decoder that processes the sequence of the acquired lines and decodes the optical code or transmits the image to a distinct processing and recognising apparatus. The decoders can communicate each other using for example a TCP/IP protocol on Ethernet. One of the decoders functions as master and collects the data from the different decoders and sends said data to the host. Alternatively, a separated device can be provided (for example a PC) that collects the data from the decoders and transfers said data to the host for subsequent processing.

When face of the objects on which the code is placed is not known or when one or more codes are present on a plurality of faces of the objects, a multi-side system, or a system with multiple reading stations, with a plurality of cameras, has to be provided.

In a multi-side system, for example with five cameras, a camera acquires the image of the upper surface of the object. Four side cameras acquire the images of the side surfaces. Each camera is coupled with a different lighting device (our a plurality of lighting devices) accommodated in a container separated from the camera. Alternatively, each camera may have the lighting device or the lighting devices integrated in the same container. For reasons of space the cameras and the devices of lateral lighting, frequently do not light/read directly, but via deflecting mirror.

A "Bottom" camera can also be provided that is to be positioned under the conveyor belt, so that the view plane, properly oriented by means of one or more deflecting mirrors if the case may be, passes through the space separating two sections of belt and, therefore, intercepts the lower surface of the objects when said objects pass from a section of the belt to the other. Therefore, this camera should be designed for reading codes arranged on the lower faces of the objects. The multiple station systems known from the prior art show the drawback that the reading stations take a large amount bf space in the direction of length of the conveyor belt, since the regions lighted by different lighting devices have not to overlap each other.

In fact, the lighting devices in said systems operate continuously, i.e. each lighting device associated with the respective camera turns on as soon as it receives an appropriate signal from the respective camera or the respective decoder, or the respective control device of the system, said signal indicating that an object entered the reading region of the system, and remains turned on during the whole reading time of the respective camera.

Should the regions lighted by different lighting devices overlap each other, any image acquired by a camera in the overlapping region would be over-lighted and/or affected by reflections deriving from the lighting device of the neighbouring camera, with the risk of compromising reading of the image.

This problem can not be compensated by using the sensitivity control of the camera, since the brightness variation on the edges of the overlapping region is very rapid and unpredictable and the reflections inside this region depend on the orientation angle of the object on the conveyor belt and the material with which the surface of the object is made.

In the known systems therefore, overlapping of the lighting planes and the view planes of the cameras is avoided. That involves a remarkable lengthening of the reading stations along the transporting direction of the objects and is felt as a great disadvantage, since usually, in typical applications such as sorting and tracking applications of parcels and objects, the reading stations should be confined in spaces as more limited as possible.

WO 2004/003830 A1 discloses an image acquisition system for objects moving on a transport plane and describes synchronised operation of light sources and cameras. Either a single light source is synchronised with two cameras taking pictures simultaneously, or two light sources are synchronised with a single camera taking sequential pictures. The purpose of these arrangements is to acquire images with different angles of illumination relative to the viewing direction.

EP-A-1100038 discloses a system according to the preamble of claim 1. The bar code scanning system comprises multiple cameras, each having a dedicated light source. Each camera and associated light source cover a part of a scan line extending across a conveyor path.

US 2006/232825 A1 discloses a system for synchronizing image capture and a light source in which multiple cameras have their shutters synchronised with a strobed light source.

US 2006/113386 A1 discloses an optical code reading system in which two light sources of different wavelengths are synchronised with a single camera.

The above mentioned documents do not address the problem of mutually interfering light sources associated with different cameras.

The present invention intends to obviate the disadvantages indicated above.

According to the present invention, a system for image acquisition is provided comprising at least two optical devices for acquiring images, each optical device comprising a respective linear camera suitable for acquiring images from at least an object travelling on a transporting plane, at least one lighting device associated with each of said at least two cameras and suitable for lighting said object in regions of said object from which said images are suitable for being acquired, **characterised in that** said lighting devices light said object with light pulses, said light pulses being synchronised so that light generated by said at least one lighting device associated with a camera does not interfere with the acquisition of another of said at least two cameras, said cameras acquiring said images only when the respective at least one lighting device is active.

Owing to the invention the length requirement of the system for image acquisition can be significantly reduced, since it possible to make sure that beams of light generated by different lighting devices do not interfere with each other, even if the view planes of the respective cameras cross each other, since, owing to the lighting with light pulses mutually synchronised, the beams of light reflected or scattered by the object in the fields of view of different cameras can not interfere with each other. That enables the reading stations to be positioned remarkably closer to each other.

The invention will be described here below, with reference to the attached drawing, wherein:
Figures 1 and 2 are sketched views showing a system for image acquisition according to the prior art, using a single camera;
Figure 3 is a sketched top view of a system for image acquisition according to the prior art, using a plurality of cameras;
Figure 4 is a diagram showing the operation of the system for image acquisition of Figure 3;
Figure 5 is a diagram showing the view planes of the cameras of the system of Figures 3 and 4;
Figure 5a is a perspective sketched view showing an arrangement of cameras to be avoided in the systems of the prior art;
Figure 6 is a plan view of a system for image acquisition according to the invention;
Figure 7 is a diagram showing the view planes of the cameras of the system for image acquisition according to the invention;
Figure 8 is a diagram showing the operation of the system for image acquisition according to the invention;
Figure 9 is a diagram showing a first example of the timing of the cameras in the system for image acquisition according to the invention;
Figure 10 is a diagram showing a second example of the timing of the cameras in the system for image acquisition according to the invention.

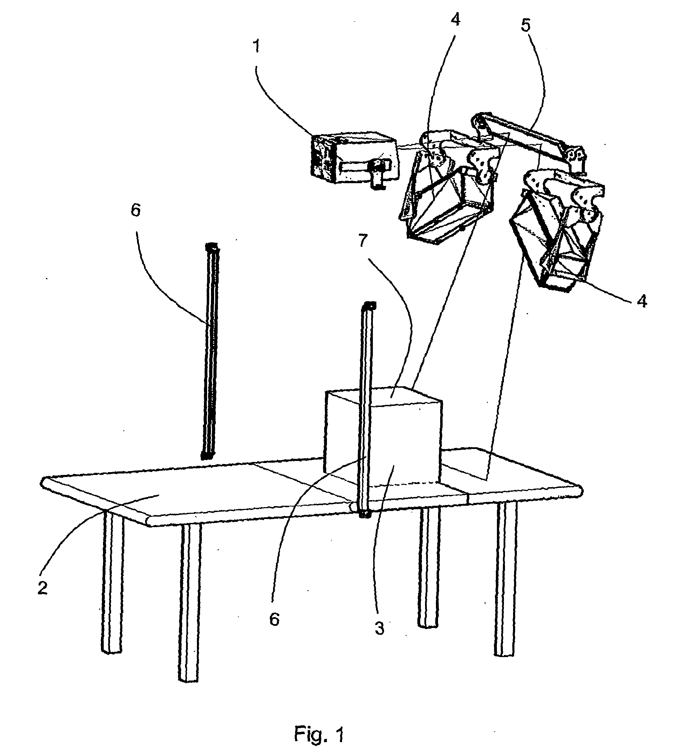

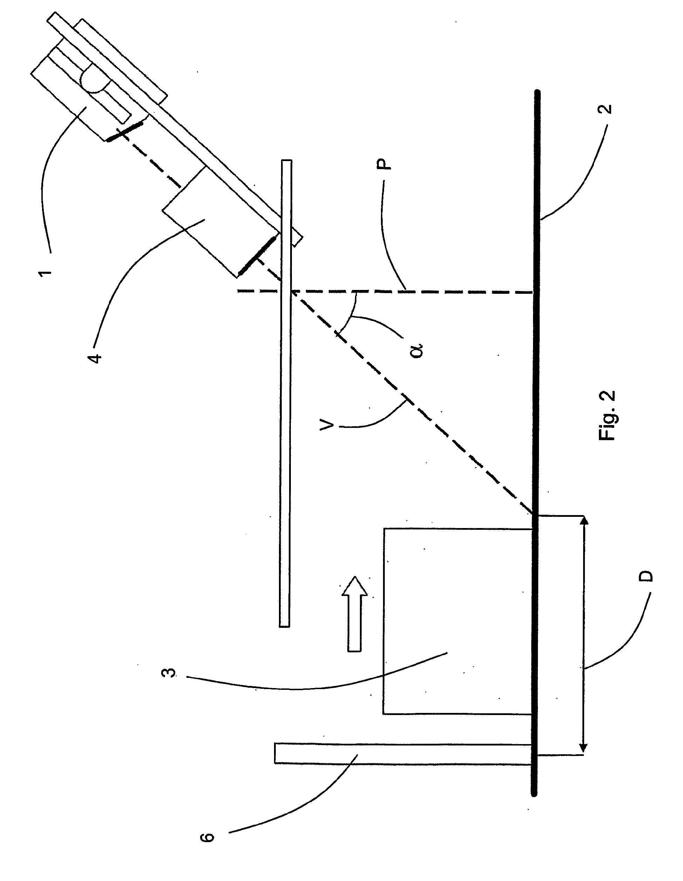

In Figures 1 and 2 a system for image acquisition according to the prior art is diagrammatically shown, which uses a single camera 1, placed above a transporting plane 2, for example a conveyor belt, on which objects 3 travel. The camera 1 is arranged for reading identifying codes, for example a bar code, printed or applied on the upper face 7 of the object 3. The camera 1 is associated with two lighting devices 4, for example LED or solid state or lamp based lighting devices in general, lighting the region (generally a plane) inside which the camera 1 has to perform the reading.

The camera 1 can read the codes placed on the upper surface 7 of the object 3 both directly and via a mirror 5, that is used when the camera can not be arranged, or properly placed for a direct reading.

The camera 1, owing to its autofocus system, substantially focuses one line at a time of the reading region on the upper surface 7 of the object 3. The line of perfect focalisation is called view line and represents the projection of the sensor of the camera 1 through the optical receiving system of the camera, at the distance of perfect focalisation The set of the view lines (or reading lines) at the various distances allowed by the autofocus system constitutes the reading field, also called field of view, of the camera 1.

The reading field lies on a plane called view plane V (Figure 2). The angle α between the view plane V and a plane P perpendicular to the plane of the conveyor belt 2 is called reading angle, or view angle.

For a proper and effective operation of the autofocus system, the camera 1 needs to know the height of the objects 3. Along the conveyor belt 2, upstream the camera 1, in the advancing direction of the objects 3, a height sensor 6 is therefore provided, for example a barrier of photocells, or a laser sensor, detecting the height of the incoming object 3.

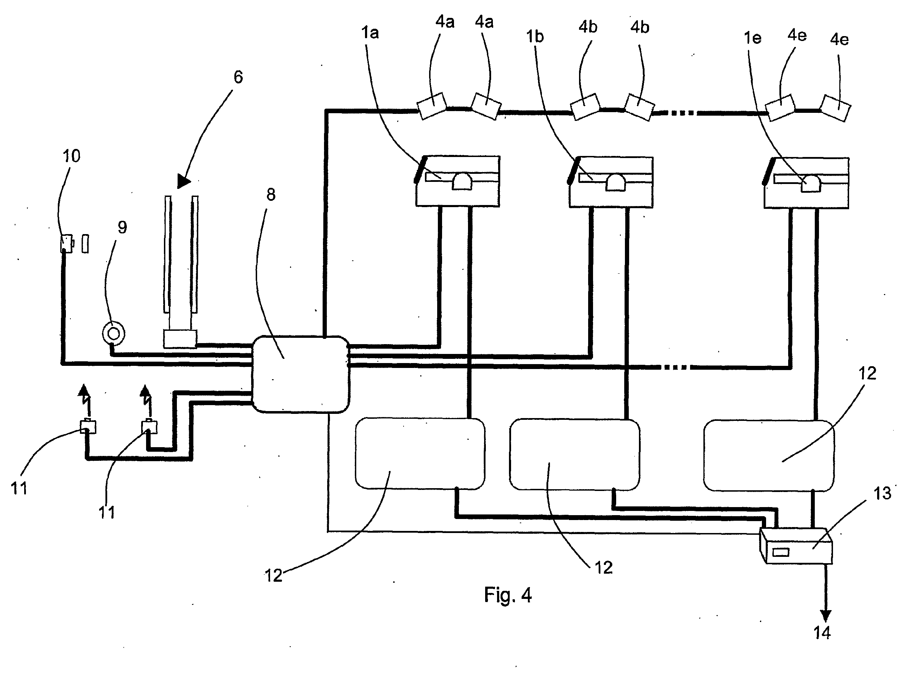

Furthermore, a speed sensor 9 is associated with the conveyor belt 2 (Figure 4), for example an encoder, for detecting the speed at which the objects 3 move, in order to regulate the sensitivity and the acquisition speed of the camera 1 on the basis of said speed.

The start and the end of the acquisition of the sequence of rows of the image ("fame") by the camera 1 are set by means of start/end signals generated by a "frame trigger" device, represented by presence sensors 10 (Figure 4) or by height sensors 6 placed along the conveyor belt 2. However the acquisition does not start as soon as the "frame trigger" device detects an object, but starts with a predetermined delay, depending on the distance D between the "frame trigger" device (in Figures 1 and 2 represented by height sensor 6) and the intersection of the view plane V of the camera 1 with the plane of the conveyor belt 2, on the view angle of the camera, on the speed of the objects and on the measured height thereof.

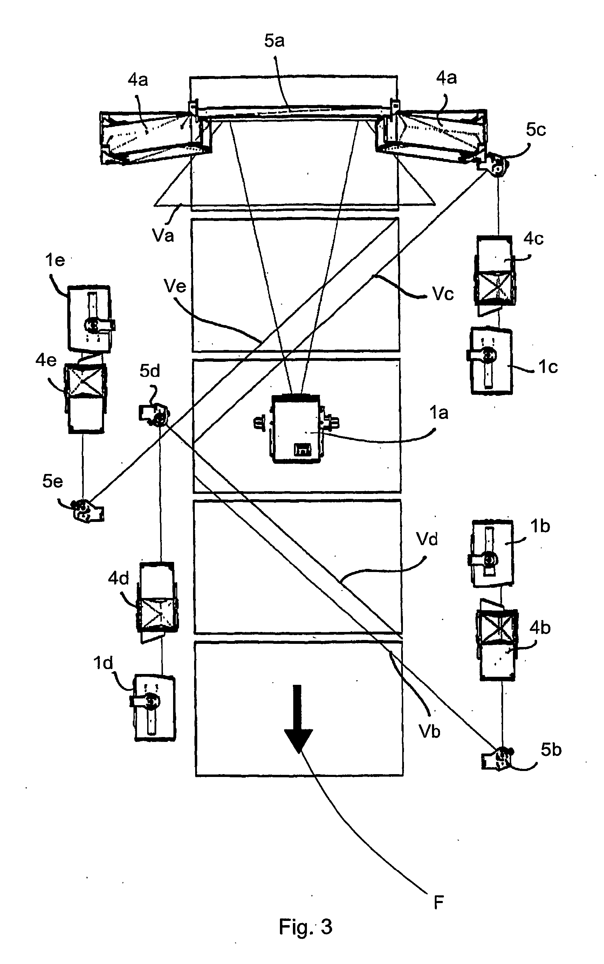

In Figure 3 a system for image acquisition according to the prior art is shown using five cameras, so as to be able to read optical codes printed or applied on the upper surface or any one of the four side faces of an object travelling on a conveyor belt 2, in the direction indicated by the arrow F.

The system comprises:
- an upper camera 1a associated with respective lighting devices 4a and a respective mirror 5a, through which the upper camera 1a reads information associated with the upper surface of a passing object, along a view plane Va (in the Figure the whole field of view of the camera 1a is represented);
- a left front camera 1b (with respect to the direction of the arrow F), associated with a respective lighting device 4b and a respective mirror 5b, through which the camera reads information associated with the front face and the left side face of a passing object, along a view plane Vb;
- a left rear camera 1c, associated with a respective lighting device 4c and a respective mirror 5c, through which the camera reads information associated with the rear face and the left side face of a passing object, along a view plane Vc;
- a right front camera 1d, associated with a respective lighting device 4d and a respective mirror 5d, through which the camera reads information associated with the front face and right side face of a passing object, along a view plane Vd;
- a right rear camera 1e, associated with a respective lighting device 4e and a respective mirror 5e, through which the camera reads information associated with the rear face and the right side face of a passing object, along a view plane Ve.

In Figure 4 the operation of the system for image acquisition shown in Figure 3 is shown.

The cameras 1a-1e are actuated by a control device 8 that is connected with the height sensor 6, that detects the height of the objects arriving in the reading region of the cameras 1a-1e, the speed sensor 9, that detects the speed at which the incoming objects movie, the presence sensor 10, that detect the arrival of an object near the reading region of the cameras 1a-1e and is used for generating the "frame trigger" signal, and the distance sensors 11 that are used for detecting the distance of the object from the edges of the conveyor belt and for determining the orientation of the object on the conveyor belt.

The control device 8, on the basis of the sensor readings, distributes such information to the cameras 1a-1e and controls the switching on of the lighting devices 4a-4d. On the base of the information received from the control device 8, each camera regulates the focalisation and the image acquisition speed, establishes the time at which the image acquisition has to be started and regulates its own sensitivity.

The images acquired by each camera, in the form of a series of image lines, are sent to a respective decoder 12 associated with the camera, which reconstructs the image acquired by the camera by assembling all the rows of the image and processes said image for extracting the information of the optical codes and/or other information. Data processed by each decoder are then sent, for example through a hub 13, to a data processing system 14, for example a personal computer, for storing and possible other processing.

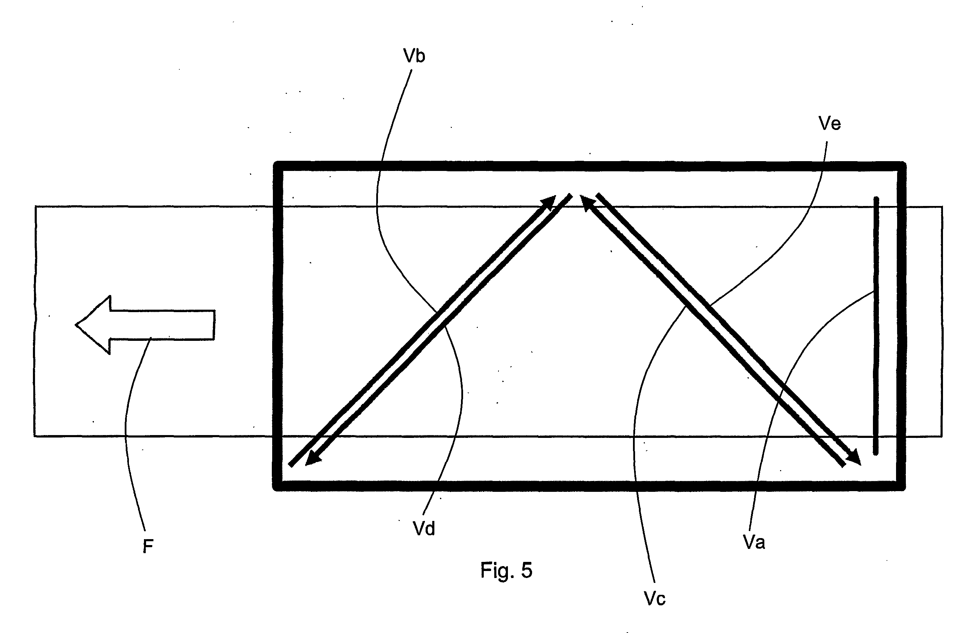

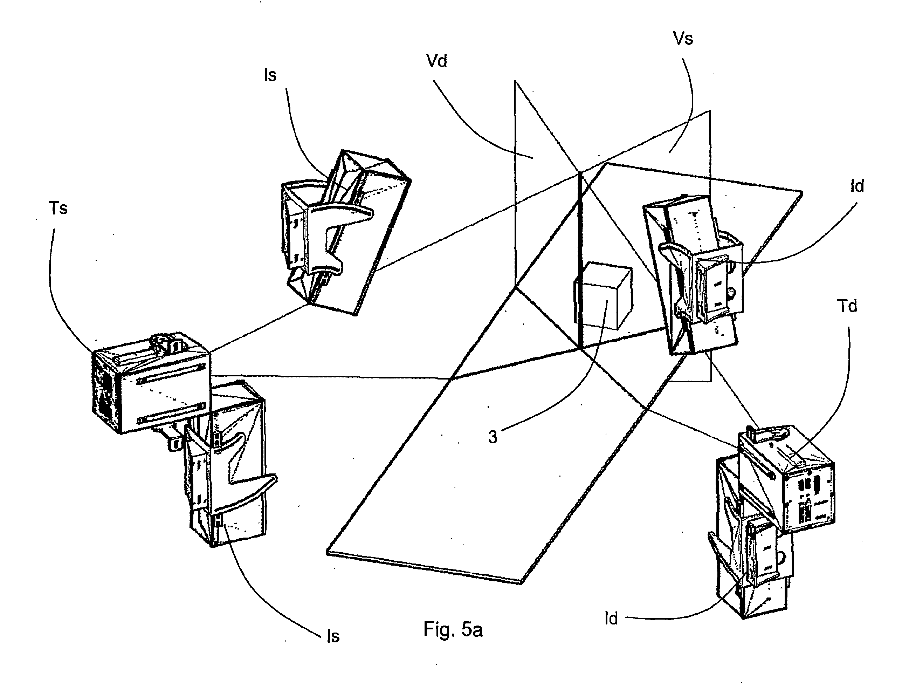

Figure 5 illustrates a diagram showing the view plane Va of the camera 1a and the view planes Vb-Ve of the cameras 1b-1e, in order to highlight that said view planes must not cross each other so that the regions lighted by lighting devices 4a-4e are prevented from crossing together causing over-lighting in the crossing regions and/or reflections that could disturb the image acquisition by the cameras 1a-1e.

For sake of explanation, reference is made to Figure 5a illustrating a camera arrangement that must be avoided in prior art systems having a plurality of cameras. Only two cameras of a prior art system with a plurality of cameras are shown in the Figure, for example the right rear camera Td, with the respective lighting devices Id and the left rear camera Ts with the respective lighting devices Is. The cameras Td and Ts, as shown in Figure 5a, are arranged so that the respective view planes Vd and Vs cross on the rear face of the object 3 so as to form angles of 90° The light incident on the rear face of the object 3, and originating from the lighting devices Is of the left rear camera Ts can be reflected in the field of view of the right rear camera Td so as to compromise the reading thereof.

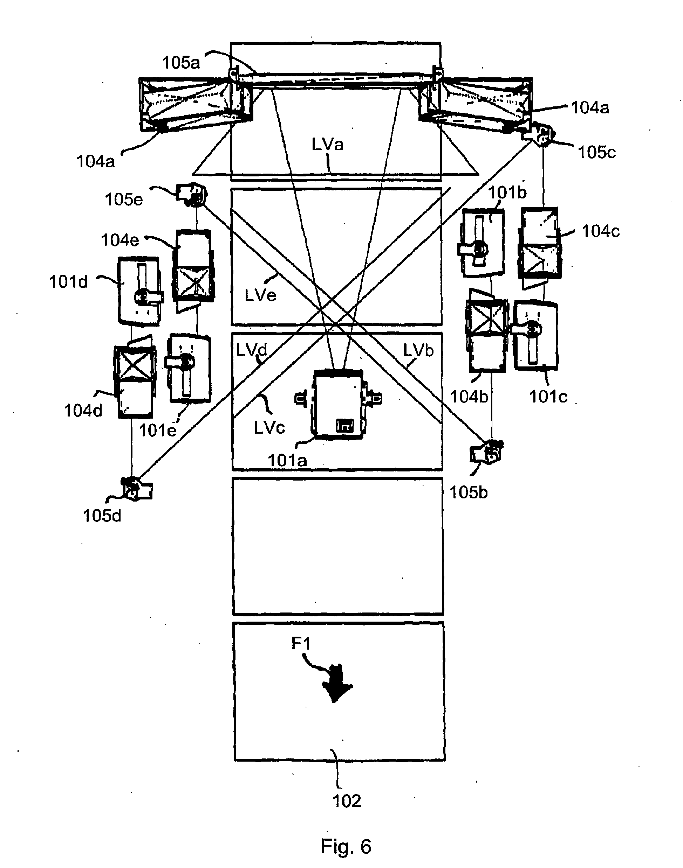

In Figure 6 a system for image acquisition according to the invention is shown, that uses five cameras, similarly to the prior art system shown in Figure 3, to read optical codes printed or applied on the upper surface or any of the four side faces of an object travelling on a conveyor belt 102, in the direction indicated by the arrow F1.

The system according to the invention comprises:
- an upper camera 101a associated with respective lighting devices 104a and a respective mirror 105a, through which the upper camera 101a reads optical information associated with the upper surface of a passing object, along a view plane LVa;
- a left front camera 101b, associated with a respective lighting device 104b and a respective mirror 105b, through which the camera reads optical information associated with the front face and the left side face of a passing object, along a view plane LVb;
- a left rear camera 101c, associated with a respective lighting device 104c and a respective mirror 105c, through which the camera reads optical information associated with the rear face and the left side face of a passing object, along a view plane LVc;
- a right front camera 101d, associated with a respective lighting device 104d and a respective mirror 105d, through which the camera reads optical information associated with the front face and the right side face of a passing object, along a view plane LVd;
- a right rear camera 101e, associated with a respective lighting device 104e and a respective mirror 105e, through which the camera reads optical information associated with the rear face and the right side face of a passing object, along a view plane LVe.

As it is possible to see from the Figure, the cameras and the mirrors are arranged so that the view planes of each camera cross the view planes of the neighbouring cameras. For example the view planes LVb and LVd, of the cameras 101b and 101d, respectively, and the view planes Lvb and LVc of the cameras 101b and 101c, respectively, cross each other. That enables the volume of the system according to the invention to be considerably reduced in the advancing direction of the conveyor belt 102, with respect to prior art systems like that shown in Figure 3, which is particularly advantageous when the system has to be installed in environments with a reduced available space.

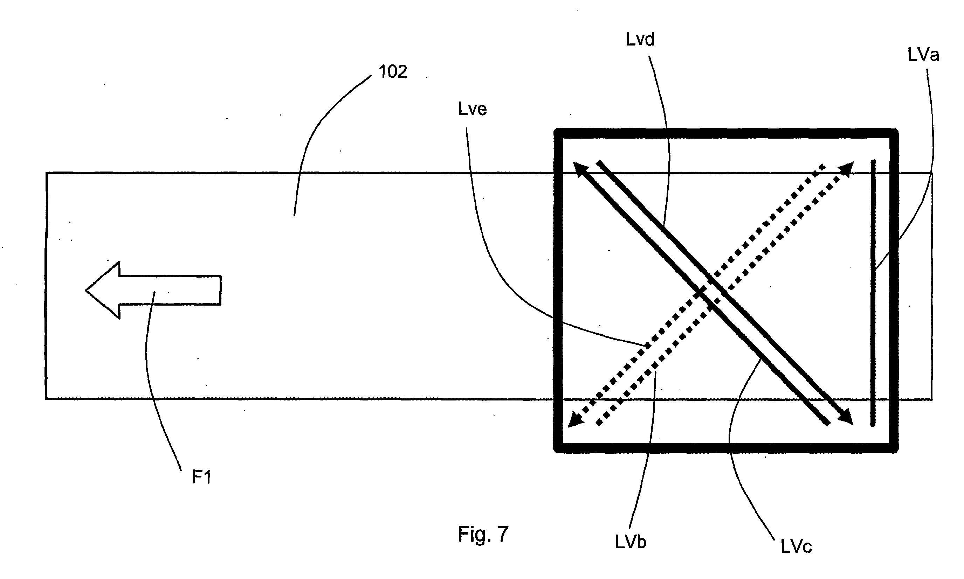

Figure 7 shows a diagram that illustrates more in detail the crossings of the view planes of the cameras.

That is made possible because, unlike the systems of the prior art, the lighting devices 104a-104e in the system according to the invention do not emit light continuously, but by pulses, which enables each lighting device to light the view.line of the respective camera, while the view lines of the other cameras, or a part of the other cameras are not lighted. Each camera 101a-101e acquires images only when the respective lighting device 104a-104e is active. That prevents a region of view of each camera from being over-lighted and removes the risk that the image acquisition of a camera can be disturbed by light reflections from the view regions of the other cameras.

For example, if the cameras 104a-104e are divided into two groups of cameras, respectively A and B, wherein the view planes of the cameras of each group do not interfere with each other, and a scanning time t is established, the system can be programmed so that the cameras of any group acquire a row during one half t/2 of the scanning time then turn off their own lighting devices and leave the cameras of the other group to acquire a row of image during the other half t/2 of the time.

The upper camera 101a, the view line of which does not interfere with the view lines of the other cameras, can be assigned indifferently to the group A or B.

For example, the group A can comprise the left front camera 101b and the right rear camera 101e, the view planes of which LVb and Lve do not interfere, being substantially parallel, while the group B can comprise the left rear camera 101c and the right front camera 101d, the view planes of which LVc and

LVd are substantially parallel.

The upper camera 101a, as said, can belong, indifferently, to the group A, or the group B, since its view line LVa does not intersect the view lines of the other cameras. Should a further upper camera be present, the view plane of which intersected the view plane of the camera 101a, the two upper cameras would clearly belong to different groups.

All the cameras 101a-101e acquire images at the same scanning frequency.

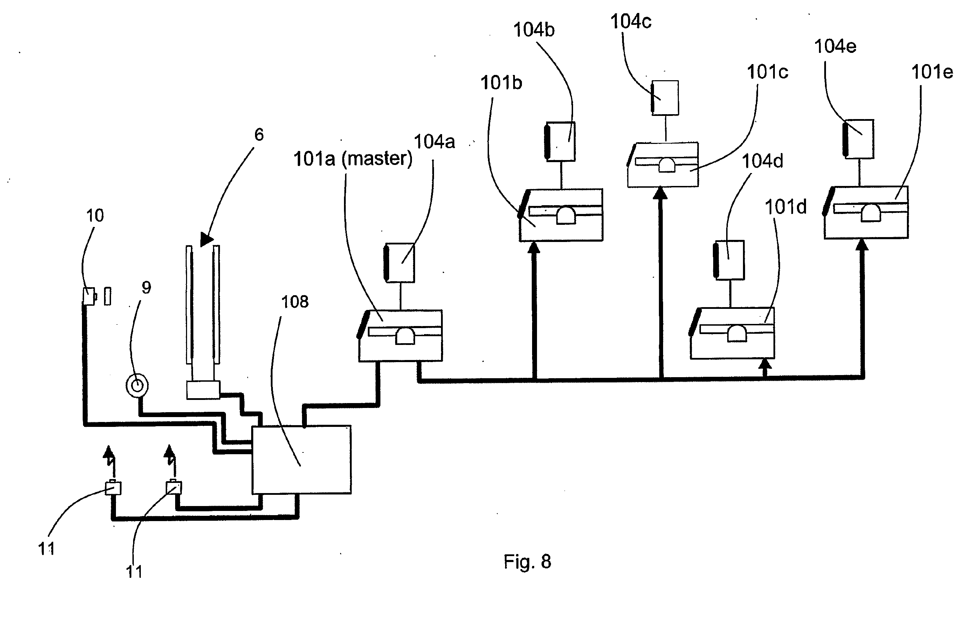

The acquisition instant is computed on the basis of a reference signal S, so-called "line trigger", generated by a so-called master control device that is the same for all the cameras, one of the cameras being able to take the role of master device, for example the upper camera 101a, as shown in Figure 8. The "line trigger" signal, the same for the cameras of the two groups, can be a square wave signal having a period T.

The master camera receives the information from the height sensors 6, the presence sensors 10, the speed sensors 9 and the distance sensors 11, by means of a junction box 108 and generates the "line trigger" and "distributes" said "line trigger" to the other cameras. In the Figure, the decoders and the connections with the data processing system are not shown: these components may be arranged and connected as in the known systems of Figure 3.

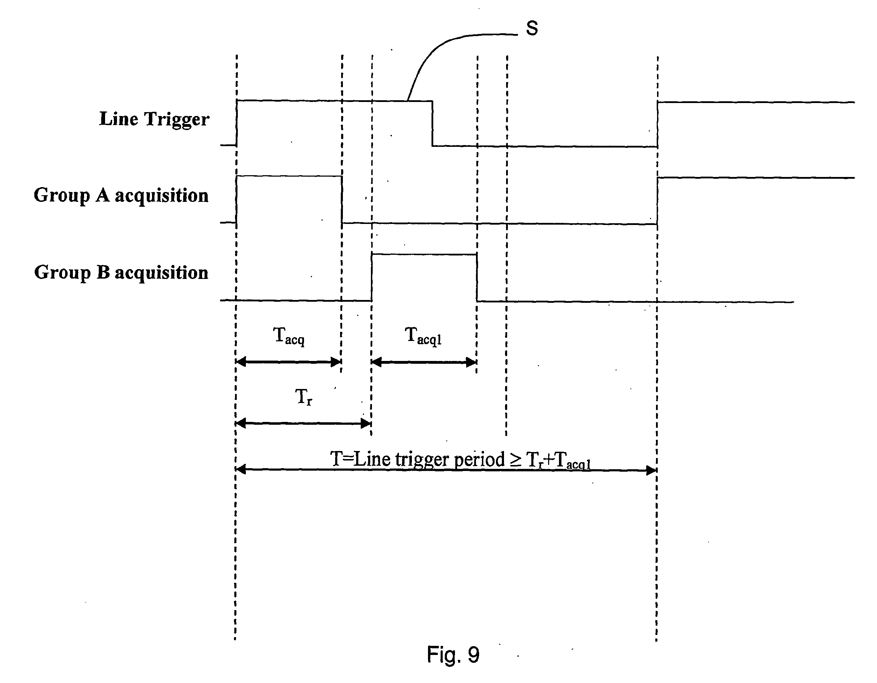

The diagram of Figure 9 shows a first timing example of the image acquisition by the cameras 101a-101e.

At every "line trigger" pulse, each camera 101a-101e turns on its own lighting device for a time interval corresponding to its own acquisition time and, during this period, opens its own electronic shutter and acquires an image line. When the electronic shutter is closed the image line is downloaded from the CCD and processed in known manner.

The cameras of the group A acquire the image by starting the acquisition on the rising front of the square wave signal of the "line trigger", the acquisition lasting the time T_{acq}. The cameras of the group B start the acquisition with a delay Tᵣ with respect to the cameras of the group A. The delay Tᵣ is greater or equal to the acquisition time T_{acq} of the cameras of the group A, so that the cameras of the group B start to acquire images only after the cameras of the group A have stopped acquiring and their lighting devices have been turned off. The cameras of the group B acquire the image for a time T_{acq1}, that may be greater than T_{acq}, or also different therefrom, provided that Tᵣ+T_{acq1}<T. If also this condition is respected, it is assured that the cameras belonging to two different groups will never turn on simultaneously their own lighting devices and never acquire images simultaneously.

According to a preferred embodiment, the delay Tr is selected equal to the half of the minimum acquisition time Tₘᵢₙ[s] for the specific application, defined as MinResolution[mm]/Vₘₐₓ[mm/s], wherein MinResolution is the minimum resolution of the camera, i.e. the dimension of the pixel in mm at the maximum distance of the object with respect to the camera, and Vₘₐₓ is the maximum speed of the objects. In this embodiment, T_{acq} and T_{acq1} are both shorter than or equal to Tₘᵢₙ/2 and T is longer than or equal to Tₘᵢₙ.

It is also possible to imagine different, but equivalent timings.

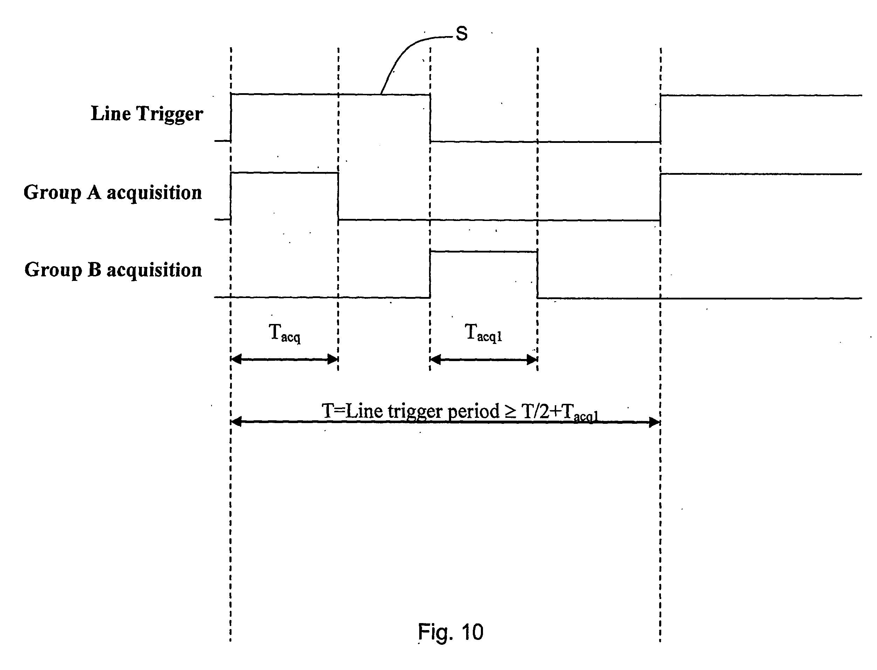

For example, with reference to Figure 10, if the "line trigger" is a square wave having a period T, the acquisition of the group B of cameras could start on the descending front of the signal, i.e. with a delay equal to T/2 with respect to the start of acquisition by the cameras of the group A, being T/2> T_{acq}, where T_{acq} is the acquisition period of the cameras of the group A. In this event, the condition T/2+T_{acq1}<=T has to be respected, which is equivalent to say T_{acq1}<=T/2, so that the cameras belonging to two different groups never turn on simultaneously their own lighting devices and never acquire simultaneously images.

For both the timing examples disclosed above, it is to be noticed that, when the speed of the objects increases, the period of the "line trigger" generated by the master is reduced up to a minimum limit Tₘᵢₙ, that is reached when the speed of the objects is the maximum speed allowed.

The acquisition times of the cameras belonging to a same group can also be different from each other. In this case, T_{acq} and T_{acq1} of the timing examples disclosed above are to be considered as the maximum acquisition times of the cameras of the respective groups.

A further advantage connected to the fact that the lighting devices 104a-104e emit light by pulse instead continuously, lies in that said lighting devices remain turned on only when the respective camera is really acquiring images, which reduces the energy required for the operation of the lighting devices, with respect to the systems of the prior art, in which the lighting devices remain continuously turned on, as long as there are objects passing on the conveyor belt.

Furthermore, if the conveyor belt stops, in the system according to the invention the lighting devices may be turned off, for being then turned on again when the conveyor belt restarts, with a further energy saving.

In the practical embodiment, the materials, the dimensions and the operative details can be different from those indicated, but technically equivalent thereto, without thereby departing from the juridical domain of the present invention.

For example, a lower camera may be provided, placed below the conveyor belt 102, capable of reading optical information carried on the'lower face of the passing objects, when these latter pass on the gap separating from each other contiguous conveyor belts. When this lower camera has a view plane that does not conflict with the view planes of the other cameras, as the upper camera 101a, said lower camera can be assigned indifferently to the group A or to the group B of cameras, for timing the image acquisition.

Furthermore, in image acquisition systems comprising a greater number of cameras and lighting devices, more than two groups may be provided, the cameras being assigned to the different groups on the base of the orientation of the respective fields of view and lighting planes.

Furthermore, the cameras may comprise one or more corresponding lighting devices inside the respective containers so as to constitute more complete optical apparatuses for image acquisition, with a clear advantage in terms of compactness of the system. Finally, the reflecting mirrors may be completely absent, or be associated only to a few cameras of the system.

Finally, even if the use of the present invention has been disclosed particularly in systems for acquiring and reading optical information, the present invention can be advantageously used in systems for acquiring images in general, irrespective of the capability of acquiring and reading optical information.

Such systems may be, for example, camera systems, and associated lighting devices, for acquiring images of objects moving by means of a transporting device, said images being to be sent to video-coding devices, or for determining dimensional and shape properties of the objects, or for being used with controlling and watching systems.

## Claims

1. A system for image acquisition comprising at least two optical devices for acquiring images, each optical device comprising a respective linear camera (101a-101e) suitable for acquiring images from at least one object passing on a transporting plane (102), at least one lighting device (104a-104e) associated with each of said at least two cameras (101a-101e) and suitable for lighting said object in regions of said object from which said images may be acquired, **characterised in that** said lighting devices (104a-104e) light said object with light pulses, said light pulses being synchronised so that light generated by said at least one lighting device (104a-104e) associated with a camera (101a-101e) does not interfere with the acquisition of another of said at least two cameras (101a-101e), said cameras acquiring said images only when the respective at least one lighting device (104a-104e) is active.

2. System according to claim 1, wherein said at least two cameras comprise a first camera (101a) suitable for acquiring said images from at least one upper surface of said object, a second camera (101b) suitable for acquiring said images from a front face and from a first side face of said object, a third camera (101c) suitable for acquiring said images from said first side face and from a rear face of said object, a fourth camera (101d) suitable for acquiring said images from said front face and from a second side face of said object and a fifth camera (101e) suitable for acquiring said images from said second side face and from said rear face of said object.

3. System according to claim 2, further comprising a sixth camera suitable for acquiring said images from a lower face of said object.

4. System according to any preceding claims, wherein said cameras are arranged so that the fields of view (LVa-LVe) of at least two of said cameras (101a-101e) intersect each other.

5. System according to any preceding claims, wherein the start and the duration (T_{acq}, T_{acq1}) of the light pulses emitted by each of said lighting devices (104a-104e) are set by a control device operatively associated with said cameras (101a-101e).

6. System according to claim 5, wherein one of said cameras (101a-101e) carries out the functions of said control device.

7. System according to claim 5, or 6, wherein said control device generates a periodic reference signal (S) on the basis of which the start and the duration (T_{acq}, T_{acq1}) of the light pulses of said lighting devices (104a-104e) are synchronised.

8. System according to claim 7, wherein said periodic reference signal (S) is a square wave.

9. System according to claim 7, or 8, wherein the start of a first light pulse emitted by said at least one lighting device (104a-104e) associated with one of said at least two cameras (101a-101e) corresponds with the start of the rising front of said square wave (S).

10. System according to claim 9, wherein the start of a second light pulse emitted by said at least one lighting device (104a-104e) associated with another of said at least two cameras (101a-101e) is delayed for a delay time (Tᵣ) with respect to the start of said first light pulse.

11. System according to claim 10, wherein said delay time (Tᵣ) is equal to half of the period (T) of said reference signal.

12. System according to any of claims 10 to 11, wherein said first light pulse has a duration (T_{acq}) equal to the duration (T_{acq1}) of said second light pulse.

13. System according to any of claims 10 to 11, wherein said first light pulse has a duration (T_{acq}) different from the duration (T_{acq1}) of said second light pulse.

14. System according to any of claims 10 to 13, wherein the sum of said delay time (Tᵣ) and the duration (T_{acq1}) of said second light pulse is shorter than the period (T) of said periodic reference signal (S).

15. System according to any preceding claims, further comprising height sensor means (6) suitable for detecting the height of objects passing on said transporting device (102), presence sensor means (10) suitable for detecting the presence of said objects in a predetermined position along said transporting device (102), speed sensor means (9) suitable for detecting the advancing speed of said objects on said transporting device (102), and distance sensor means (11) suitable for detecting the distance of said object from two reference planes parallel to the advancing direction (F1) of said object.

16. System according to claim 15, further comprising junction box means (108) suitable for collecting signals generated by said height sensor means (6), said presence sensor means (10), said speed sensor means (9) and said distance sensor means (11) and for sending said signals to said control device.

17. System according to any preceding claims, wherein reflecting means is associated with at least one camera (101a-101e) of said at least two cameras (105a-105e), said reflecting means being suitable for directing light reflected by said object towards said camera (101a-101e).

18. System according to any of the preceding claims, wherein said at least two cameras are suitable for acquiring optical information associated with said at least one object.

19. System according to any of the preceding claims, wherein said at least two optical devices for acquiring images, are fixed optical devices.

## Patentansprüche

1. System zur Bilderfassung, mit zumindest zwei optischen Vorrichtungen zum Erfassen von Bildern, wobei jede optische Vorrichtung eine jeweilige Linearkamera (101a-101e) aufweist, die zum Erfassen von Bildern von zumindest einem Objekt, das auf einer Transportebene (102) vorbeiläuft, geeignet ist, wobei zumindest eine Beleuchtungsvorrichtung (104a-104e) jeder der zumindest zwei Kameras (101a-101e) zugeordnet und zum Beleuchten des Objekts in Bereichen des Objekts geeignet ist, von denen die Bilder erfasst werden können, **dadurch gekennzeichnet, dass** die Beleuchtungsvorrichtungen (104a-104e) das Objekt mit Lichtpulsen beleuchten, wobei die Lichtpulse synchronisiert sind, so dass Licht, das von der zumindest einen Beleuchtungsvorrichtung (104a-104e) erzeugt wird, die einer Kamera (101a-101e) zugeordnet ist, nicht die Erfassung von einer anderen der zumindest zwei Kameras (101a-101e) stört, wobei die Kameras die Bilder nur erfassen, wenn die jeweilige zumindest eine Beleuchtungsvorrichtung (104a-104e) aktiv ist.

2. System nach Anspruch 1, wobei die zumindest zwei Kameras eine erste Kamera (101a), die zum Erfassen der Bilder von zumindest einer oberen Oberfläche des Objekts geeignet ist, eine zweite Kamera (101b), die zum Erfassen der Bilder von einer Vorderseite und von einer ersten Seitenfläche des Objekts geeignet ist, eine dritte Kamera (101c), die zum Erfassen der Bilder von der ersten Seitenfläche und von einer Rückseite des Objekts geeignet ist, eine vierte Kamera (101d), die zum Erfassen der Bilder von der Vorderseite und von einer zweiten Seitenfläche des Objekts geeignet ist, und eine fünfte Kamera (101e) aufweisen, die zum Erfassen der Bilder von der zweiten Seitenfläche und von der Rückseite des Objekts geeignet ist.

3. System nach Anspruch 2, weiterhin mit einer sechsten Kamera, die zum Erfassen der Bilder von einer Unterseite des Objekts geeignet ist.

4. System nach irgendeinem der vorhergehenden Ansprüche, wobei die Kameras so angeordnet sind, dass die Sichtfelder (LVa-LVe) von zumindest zwei der Kameras (101-101e) einander schneiden.

5. System nach irgendeinem der vorhergehenden Ansprüche, wobei der Beginn und die Dauer (T_{acq},T_{acq1}) der Lichtpulse, die von jeder der Beleuchtungsvorrichtungen (104a-104e) emittiert werden, durch eine Steuervorrichtung bestimmt werden, die mit den Kameras (101a-101e) in Wirkverbindung steht.

6. System nach Anspruch 5, wobei eine der Kameras (101a-101e) die Funktion der Steuervorrichtung ausführt.

7. System nach Anspruch 5 oder 6, wobei die Steuervorrichtung ein periodisches Referenzsignal S erzeugt, auf dessen Basis der Beginn und die Dauer (T_{acq}, T_{acq1}) der Lichtpulse der Beleuchtungsvorrichtungen (104a-104e) synchronisiert werden.

8. System nach Anspruch 7, wobei das periodische Referenzsignal (S) ein Rechtecksignal ist.

9. System nach Anspruch 7 oder 8, wobei der Beginn eines ersten Lichtpulses, der von der zumindest einen, einer der zumindest zwei Kameras (101a-101e) zugeordneten Beleuchtungsvorrichtung (104a-104e) emittiert wird, mit dem Beginn der Anstiegsflanke des Rechtecksignals (S) korrespondiert.

10. System nach Anspruch 9, wobei der Beginn eines zweiten Lichtpulses, der von der zumindest einen, einer anderen der zumindest zwei Kameras (101a-101e) zugeordneten Beleuchtungsvorrichtung (104a-104e) emittiert wird, um eine Verzögerungszeit (Tᵣ) in Bezug auf den Beginn des ersten Lichtpulses verzögert ist.

11. System nach Anspruch 10, wobei die Verzögerungszeit (Tᵣ) gleich der halben Periode (T) des Referenzsignals ist.

12. System nach irgendeinem der Ansprüche 10 bis 11, wobei der erste Lichtpuls eine Dauer (T_{acq}) aufweist, die gleich der Dauer (T_{acq1}) des zweiten Lichtpulses ist.

13. System nach irgendeinem der Ansprüche 10 bis 11, wobei der erste Lichtpuls eine Dauer (T_{acq}) aufweist, die von der Dauer (T_{acq1}) des zweiten Lichtpulses verschieden ist.

14. System nach irgendeinem der Ansprüche 10 bis 13, wobei die Summe aus der Verzögerungszeit (Tᵣ) und der Dauer (T_{acq1}) des zweiten Lichtpulses kürzer ist als die Periode (T) des periodischen Referenzsignals (S).

15. System nach irgendeinem der vorhergehenden Ansprüche, weiterhin mit Höhensensormitteln (6), die zum Detektieren der Höhe von Gegenständen, die auf der Transportvorrichtung (102) vorbeilaufen, geeignet sind, Anwesenheitssensormitteln (10), die zum Detektieren der Anwesenheit der Objekte in einer vorbestimmten Position entlang der Transportvorrichtung (102) geeignet sind, Geschwindigkeitssensormitteln (9), die zum Detektieren der Vorrückgeschwindigkeit der Objekte auf der Transportvorrichtung (102) geeignet sind, und Abstandssensormitteln (11), die zum Detektieren des Abstands des Objekts von zwei Referenzebenen parallel zu der Vorrückrichtung (F1) des Objekts geeignet sind.

16. System nach Anspruch 15, weiterhin mit Anschlussboxmitteln (108), die zum Sammeln von Signalen, die von den Höhensensormitteln (6), den Anwesenheitssensormitteln (10), den Geschwindigkeitssensormitteln (9) und den Abstandssensormitteln (11) erzeugt werden, und zum Senden der Signale zu der Steuervorrichtung geeignet sind.

17. System nach irgendeinem der vorhergehenden Ansprüche, wobei zumindest einer Kamera (101a-101e) der zumindest zwei Kameras (105a-105e) Reflektormittel zugeordnet sind, wobei die Reflektormittel zum Richten von von dem Objekt reflektiertem Licht zu der Kamera (101a-101e) geeignet sind.

18. System nach irgendeinem der vorhergehenden Ansprüche, wobei die zumindest zwei Kameras zum Erfassen von optischer Information, die dem zumindest einen Objekt zugeordnet ist, geeignet sind.

19. System nach irgendeinem der vorhergehenden Ansprüche, wobei die zumindest zwei optischen Vorrichtungen zum Erfassen von Bildern feststehende optische Vorrichtungen sind.

## Revendications

1. Système d'acquisition d'images comprenant au moins deux dispositifs optiques pour l'acquisition d'images, chaque dispositif optique comprenant une caméra linéaire respective (101a-101e) apte à acquérir des images d'au moins un objet passant sur un plan de transport (102), au moins un dispositif d'éclairage (104a-104e) associé à chacune desdites au moins deux caméras (101a-101e) et apte à éclairer ledit objet dans des zones dudit objet à partir desquelles lesdites images peuvent être acquises, ***caractérisé en ce que*** lesdits dispositifs d'éclairage (104a-104e) éclairent ledit objet avec des impulsions lumineuses, lesdites impulsions lumineuses étant synchronisées de telle façon que la lumière créée par ledit au moins un dispositif d'éclairage (104a-104e) associé à une caméra (101a-101e) n'interfère pas avec l'acquisition d'une autre desdites au moins deux caméras (101a-101e), lesdites caméras n'acquérant lesdites images que lorsque ledit au moins un dispositif d'éclairage respectif (104a-104e) est actif.

2. Système selon la revendication 1, dans lequel lesdites au moins deux caméras comprennent une première caméra (101a) apte à acquérir lesdites images d'au moins une surface supérieure dudit objet, une deuxième caméra (101b) apte à acquérir lesdites images d'une face avant et d'une première face latérale dudit objet, une troisième caméra (101c) apte à acquérir lesdites images de ladite première face latérale et d'une face arrière dudit objet, une quatrième caméra (101d) apte à acquérir lesdites images de ladite face frontale et d'une deuxième face latérale dudit objet et une cinquième caméra (101e) apte à acquérir lesdites images de ladite deuxième face latérale et de ladite face arrière dudit objet.

3. Système selon la revendication 2, comprenant de plus une sixième caméra apte à acquérir lesdites images d'une face inférieure dudit objet.

4. Système selon l'une quelconque des revendications précédentes, dans lequel lesdites caméras sont disposées de telle sorte que les champs angulaires (LVa-LVe) d'au moins deux desdites caméras (101a-101e) s'intersectent.

5. Système selon l'une quelconque des revendications précédentes, dans lequel le début et la durée (T_{acq}, T_{acq1}) des impulsions lumineuses émises par chacun desdits dispositifs d'éclairage (104a-104e) sont fixés par un dispositif de commande associé opérationellement auxdites caméras (101 a-101 e).

6. Système selon la revendication 5, dans lequel l'une desdites caméras (101a-101e) assure les fonctions dudit dispositif de commande.

7. Système selon la revendication 5 ou 6, dans lequel ledit dispositif de commande génère un signal de référence périodique (S) sur la base duquel le début et la durée (T_{acq}, T_{acq1}) des impulsions lumineuses desdits dispositifs d'éclairage (104a-104e) sont synchronisés.

8. Système selon la revendication 7, dans lequel ledit signal de référence périodique (S) est une onde carrée.

9. Système selon la revendication 7 ou 8, dans lequel le début d'une première impulsion lumineuse émise par ledit au moins un premier dispositif d'éclairage (104a-104e) associé à l'une desdites au moins deux caméras (101a-101e) correspond au début du front d'onde montant de ladite onde carrée (S).

10. Système selon la revendication 9, dans lequel le début d'une deuxième impulsion lumineuse émise par ledit au moins un dispositif d'éclairage (104a-104e) associé à une autre desdites au moins deux caméras (101a-101e) est retardé d'un temps de retard (Tᵣ) par rapport au début de ladite première impulsion lumineuse.

11. Système selon la revendication 10, dans lequel ledit temps de retard (Tᵣ) est égal à la moitié de la période (T) dudit signal de référence.

12. Système selon l'une quelconque des revendications 10 à 11, dans lequel ladite première impulsion lumineuse a une durée (T_{acq}) égale à la durée (T_{acq1}) de ladite deuxième impulsion lumineuse.

13. Système selon l'une quelconque des revendications 10 à 11, dans lequel ladite première impulsion lumineuse a une durée (T_{acq}) différente de la durée (T_{acq1}) de ladite deuxième impulsion lumineuse.

14. Système selon l'une quelconque des revendications 10 à 13, dans lequel la somme dudit temps de retard (Tᵣ) et de la durée (T_{acq1}) de ladite deuxième impulsion lumineuse est inférieure à la période (T) dudit signal de référence périodique (S).

15. Système selon l'une quelconque des revendications précédentes, comprenant de plus des moyens de capteur de hauteur (6) aptes à détecter la hauteur d'objets passant sur ledit dispositif de transport (102), des moyens de capteur de présence (10) aptes à détecter la présence desdits objets dans une position prédéterminée le long dudit dispositif de transport (102), des moyens de capteur de vitesse (9) aptes à détecter la vitesse de progression desdits objets sur ledit dispositif de transport (102), et des moyens de capteur de distance (11) aptes à détecter la distance dudit objet par rapport à deux plans de référence parallèles à la direction de progression (F1) dudit objet.

16. Système selon la revendication 15, comprenant de plus des moyens de boîte de jonction (108) aptes à collecter les signaux générés par lesdits moyens de capteur de hauteur (6), lesdits moyens de capteur de présence (10), lesdits moyens de capteur de vitesse (9), lesdits moyens de capteur de distance (11), et à envoyer lesdits signaux audit dispositif de commande.

17. Système selon l'une quelconque des revendications précédentes, dans lequel des moyens réfléchissants sont associés à au moins une caméra (101a-101e) desdites au moins deux caméras (105a-105e), lesdits moyens réfléchissants étant aptes à diriger une lumière réfléchie par ledit objet en direction de ladite caméra (101a-101e).

18. Système selon l'une quelconque des revendications précédentes, dans lequel lesdites au moins deux caméras sont aptes à acquérir des informations optiques associées audit au moins un objet.

19. Système selon l'une quelconque des revendications précédentes, dans lequel lesdits au moins deux dispositifs optiques pour l'acquisition d'images sont des dispositifs optiques fixes.
